# EUROPEAN PATENT APPLICATION

(11) **EP 4 753 003 A1**
(43) Date of publication of application: **03.06.2026**
(21) Application number: 25219463.4
(22) Date of filing: 28.11.2025
(51) Int. Cl.: H01M 10/056, H01M 10/052

(54) **SOLID ELECTROLYTE COMPOSITE, POSITIVE ELECTRODE ACTIVE MATERIAL SLURRY INCLUDING THE SAME, AND SOLID ELECTROLYTE SLURRY INCLUDING THE SAME**

(30) Priority: 29.11.2024 KR 20240174658
(71) Applicant: SAMSUNG SDI CO., LTD., Yongin-si, Gyeonggi-do 17084 (KR)
(72) Inventor: YOU, Hoseon, 17084 Yongin-si, Gyeonggi-do (KR); KIM, Jinhee, 17084 Yongin-si, Gyeonggi-do (KR); KANG, Dongwoo, 17084 Yongin-si, Gyeonggi-do (KR); KIM, Junghwan, 17084 Yongin-si, Gyeonggi-do (KR); OH, Daeyang, 17084 Yongin-si, Gyeonggi-do (KR)
(74) Representative: Michalski Hüttermann & Partner Patentanwälte mbB

(57) **Abstract**

The present disclosure relates to a solid electrolyte composite, a positive electrode active material slurry including the solid electrolyte composite, and a solid electrolyte slurry including the solid electrolyte composite. More particularly, the present disclosure relates to a solid electrolyte composite, which includes a sulfide-based solid electrolyte and a surface modifier on a surface of the sulfide-based solid electrolyte. The surface modifier includes a linear hydrocarbon chain and a polar functional group bonded to the linear hydrocarbon chain, and the surface modifier is attached to the surface of the sulfide-based solid electrolyte via the polar functional group.

## Description

### CROSS-REFERENCE TO RELATED APPLICATION

This application claims priority to Korean Patent Application No. 10-2024-0174658 filed on November 29, 2024 in the Korean Intellectual Property Office.

### BACKGROUND

The present disclosure relates to a solid electrolyte composite, a positive electrode active material slurry including the solid electrolyte composite, and a solid electrolyte slurry including the solid electrolyte composite.

There is increasing presence of high-energy density and safe batteries driven by industrial demands. For example, lithium ion batteries are being commercialized not only in formation-related and communication devices, but also in the automotive industry. In the automotive industry, safety is typically emphasized due to the direct relation thereof to preserving human lives.

There are all-solid-state batteries that include a solid electrolyte in place of a liquid electrolyte. As an all-solid-state battery does not use a flammable organic dispersion medium, the possibility of fire or explosion may be significantly reduced, even in the event of a short-circuit. Accordingly, an all-solid-state battery may significantly increase safety as compared to a lithium ion battery using a liquid electrolyte.

### SUMMARY

An example embodiment of the present disclosure includes a solid electrolyte composite with desired or improved solvent stability.

An example embodiment of the present disclosure includes a positive electrode and a solid electrolyte layer with desired or improved lifetime characteristics and ion conductivity.

According to an example embodiment of the present disclosure, a solid electrolyte composite may include a sulfide-based solid electrolyte, and a surface modifier on a surface of the sulfide-based solid electrolyte. The surface modifier includes a linear hydrocarbon chain and a polar functional group bonded to the linear hydrocarbon chain. The surface modifier is attached to the surface of the sulfide-based solid electrolyte via the polar functional group.

According to an example embodiment of the present disclosure, a positive electrode active material slurry may include a positive electrode active material and a solid electrolyte composite. The solid electrolyte composite includes a sulfide-based solid electrolyte, and a surface modifier on a surface of the sulfide-based solid electrolyte. The surface modifier includes a linear hydrocarbon chain and a polar functional group bonded to the linear hydrocarbon chain. The surface modifier is attached to the surface of the sulfide-based solid electrolyte via the polar functional group.

According to an example embodiment of the present disclosure, a method for manufacturing a solid electrolyte composite may include preparing a sulfide-based solid electrolyte, preparing a surface modifier, and mixing the sulfide-based solid electrolyte with the surface modifier. The surface modifier includes a linear hydrocarbon chain and a polar functional group bonded to the linear hydrocarbon chain. The surface modifier is attached to the surface of the sulfide-based solid electrolyte via the polar functional group.

### BRIEF DESCRIPTION OF DRAWINGS

FIG. 1 illustrates a plan view showing an all-solid-state battery according to an example embodiment of the present disclosure.
FIG. 2A illustrates a cross-sectional view taken along line A-A' of FIG. 1.
FIG. 2B illustrates a cross-sectional view taken along line B-B' of FIG. 1.
FIG. 3 illustrates a cross-sectional view taken along line A-A' of FIG. 1, showing an all-solid-state battery according to another example embodiment of the present disclosure.
FIG. 4 illustrates an enlarged view of a solid electrolyte composite according to an example embodiment of the present disclosure.
FIG. 5 illustrates an enlarged cross-sectional view of the "M" region in FIG. 2A, showing a positive electrode active material layer 120 according to a comparative example of the present disclosure.
FIG. 6 illustrates an enlarged cross-sectional view of the "M" region in FIG. 2A, showing a positive electrode active material layer 120 according to an example embodiment of the present disclosure.
FIG. 7 illustrates a graph showing XPS analysis results of solid electrolytes according to the Embodiment and Comparative Embodiments of the present disclosure.
FIG. 8 is a flow chart illustrating a method of manufacturing a solid electrolyte composite, according to an example embodiment.

### DETAILED DESCRIPTION OF EMBODIMENTS

In order to sufficiently understand the configuration and effect of the present disclosure, some example embodiments of the present disclosure are described with reference to the accompanying drawings. It should be noted, however, that the present disclosure is not limited to the following example embodiments, and may be implemented in various forms. Rather, the example embodiments are provided only to disclose the present disclosure and let those skilled in the art fully know the scope of the present disclosure.

In this description, it is understood that, when an element is referred to as being "on" another element, the element can be "directly on" the other element, or intervening elements may be present therebetween. In the drawings, thicknesses of some components may be exaggerated for effectively explaining the technical contents thereof. Like reference numerals refer to like elements throughout the specification.

Some example embodiments detailed in this description are discussed with reference to sectional and/or plan views as ideal example views of the present disclosure. In the drawings, thicknesses of layers and regions may be exaggerated for effectively explaining the technical contents. Accordingly, regions illustrated in the drawings have general properties, and shapes of regions illustrated in the drawings are used to disclose specific shapes but do not limit to the scope of the present disclosure. It is understood that, although the terms "first," "second," "third," and the like, may be used herein to describe various elements, these elements should not be limited by these terms. These terms are only used to distinguish one element from another element. The example embodiments explained and illustrated herein include complementary embodiments thereof.

The terms in this description are merely used to describe various embodiments, but are not intended to limit the present disclosure. Unless otherwise specially noted in this description, the expression of singular form "a," "an," and "the" may include the expression of plural form. The terms "comprises/includes" and/or "comprising/including" used in this description do not exclude the presence or addition of one or more other components.

In this description, the term "combination thereof" may refer to a mixture, a stack, a composite, a copolymer, an alloy, a blend, or a reaction product.

In this description, each of phrases as "A or B," "at least one of A and B," "at least one of A or B," "A, B, or C," "at least one of A, B, and C," and "at least one of A, B, or C," may include any one of, or all possible combinations of, the items enumerated together in a corresponding one of the phrases.

Unless otherwise specially defined in this description, a particle diameter may indicate an average particle diameter (D50), which refers to the diameter of particles at a cumulative volume of about 50 vol% in particle size distribution. The average particle diameter (D50) may be measured by a laser scattering method. In the laser scattering method, target particles are dispersed in a dispersion medium, introduced into a commercial laser diffraction particle diameter measurement instrument (e.g., MT3000 of Microtrac), and irradiated with ultrasonic waves of about 28 kHz at an output of about 60 W. The average particle diameter (D50), corresponding to about 50% of the particle size distribution, may then be calculated within the measurement instrument.

In an example embodiment, in this description, the average particle diameter may refer to a diameter measured by randomly or non-systematically selecting 100 or more particles from an electron microscope image. Alternatively, in this description, the average particle diameter may be measured using a particle size analyzer, and may refer to a diameter of a particle having a cumulative volume of about 50 vol% in particle size distribution.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

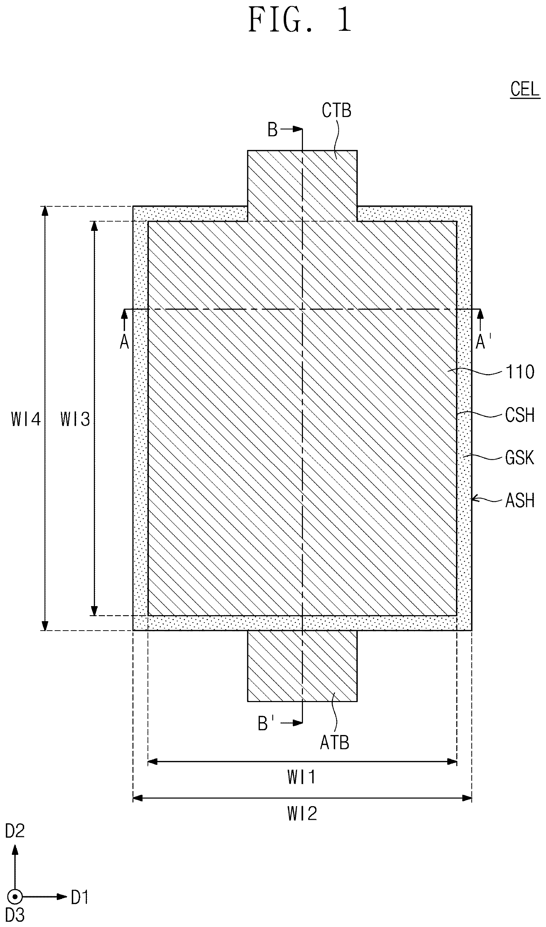

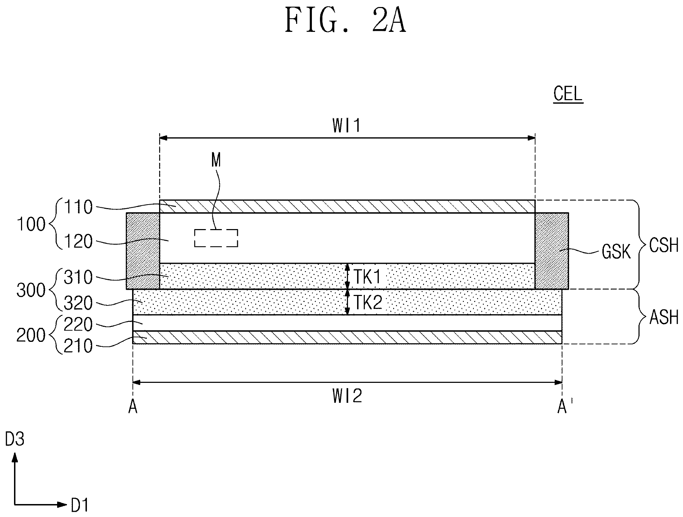

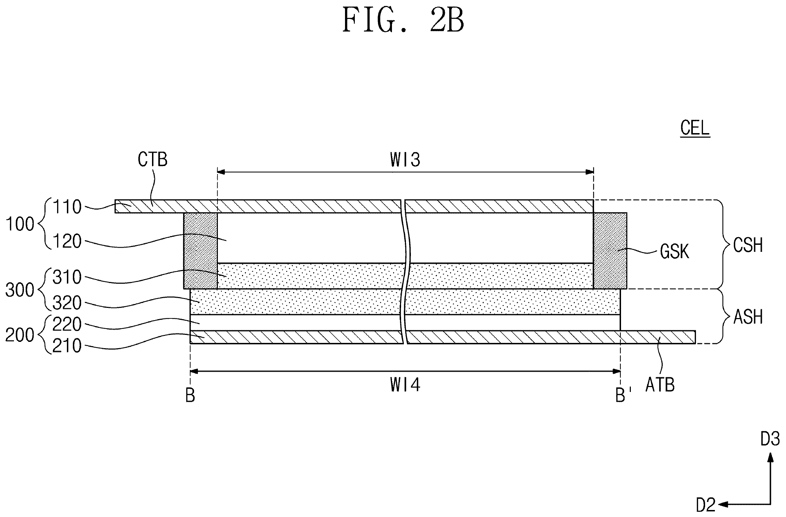

FIG. 1 illustrates a plan view showing an all-solid-state battery according to an example embodiment of the present disclosure. FIG. 2A illustrates a cross-sectional view taken along line A-A' of FIG. 1. FIG. 2B illustrates a cross-sectional view taken along line B-B' of FIG. 1.

Referring to FIGS. 1, 2A and 2B, a unit cell CEL of an all-solid-state battery according to the present disclosure may include a positive electrode layer 100, a negative electrode layer 200 facing the positive electrode layer 100, and a solid electrolyte layer 300 disposed between the positive electrode layer and the negative electrode layer 200. The present disclosure, however, is not limited thereto, and the unit cell CEL may further include an additional functional layer, such as an adhesion enhancement layer, disposed between the positive electrode layer 100 and the solid electrolyte layer 300, or between the negative electrode layer 200 and the solid electrolyte layer 300.

### Positive Electrode Layer 100

The positive electrode layer 100 according to an example embodiment of the present disclosure may include a positive electrode current collector 110 and a positive electrode active material layer 120 disposed on the positive electrode current collector 110.

The positive electrode current collector 110 may provide a reference surface on which the positive electrode active material layer 120 is disposed. The positive electrode current collector 110 may include a plate or foil including, for example, at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

Differently from that shown in FIG. 1, in an example embodiment of the present disclosure, the positive electrode current collector 110 may not be provided. Although not shown, to increase adhesion between the positive electrode current collector 110 and the positive electrode active material layer 120, a carbon layer having a thickness in a range of ≥ 0.1 µm to ≤ 4 µm may further be disposed between the positive electrode current collector 110 and the positive electrode active material layer 120.

### Positive Electrode Active Material Layer 120

The positive electrode active material layer 120 according to an example embodiment of the present disclosure may include a positive electrode active material and a solid electrolyte.

The positive electrode active material of the positive electrode active material layer 120 may include a material that can reversibly absorb and desorb lithium ions. The positive electrode active material may include a plurality of particles. For example, the positive electrode active material may include a lithium transition metal oxide (e.g., at least one of lithium cobalt oxide (LCO), lithium nickel oxide, lithium nickel cobalt oxide, lithium nickel cobalt aluminum oxide (NCA), lithium nickel cobalt manganese oxide (NCM), lithium manganate, or lithium iron phosphate), nickel sulfide, copper sulfide, lithium sulfide, iron oxide, or vanadium oxide, but the present disclosure is not limited thereto. The positive electrode active material may be used alone, or in a mixture of two or more compounds.

The lithium transition metal oxide may be or include, for example, a compound represented by one of LiₐA_{1-b}B_{b}D₂ (where 0.90 ≤ a ≤ 1 and 0 ≤ b ≤ 0.5), LiₐE_{1-b}B_{b}O_{2-c}D_{c} (where 0.90 ≤ a ≤ 1, 0 ≤ b ≤ 0.5, and 0 ≤ c ≤ 0.05), LiE_{2-b}B_{b}O_{4-c}D_{c} (where 0 ≤ b ≤ 0.5 and 0 ≤ c ≤ 0.05), LiₐNi_{1-b-c}Co_{b}B_{c}D_{α} (where 0.90 ≤ a ≤ 1, 0 ≤ b ≤ 0.5, 0 ≤ c ≤ 0.05, and 0<α<2), LiₐNi_{1-b-c}Co_{b}B_{c}O_{2-α}F_{α} (where 0.90 ≤ a ≤ 1, 0 ≤ b ≤ 0.5, 0 ≤ c ≤ 0.05, and 0<α<2), LiₐNi_{1-b-c}Mn_{b}B_{c}D_{α} (where 0.90 ≤ a ≤ 1, 0 ≤ b ≤ 0.5, 0 ≤ c ≤ 0.05, and 0< α ≤ 2), LiₐNi_{1-b-c}Mn_{b}B_{c}O_{2-α}F_{α} (where 0.90 ≤ a ≤ 1, 0 ≤ b ≤ 0.5, 0 ≤ c ≤ 0.05, and 0<α<2), LiₐNi_{b}E_{c}G_{d}O₂ (where 0.90 ≤ a ≤ 1, 0 ≤ b ≤ 0.9, 0 ≤ c ≤ 0.5, and 0.001 ≤ d ≤ 0.1), LiₐNi_{b}Co_{c}Mn_{d}GₑO₂ (where 0.90 ≤ a ≤ 1, 0 ≤ b ≤ 0.9, 0 ≤ c ≤ 0.5, 0 ≤ d ≤ 0.5, and 0.001 ≤ e ≤ 0.1), LiₐNiG_{b}O₂ (where 0.9 ≤ a ≤ 1 and 0.001 ≤ b ≤ 0.1), LiₐCoG_{b}O₂ (where 0.90 ≤ a ≤ 1 and 0.001 ≤ b ≤ 0.1), LiₐMnG_{b}O₂ (where 0.90 ≤ a ≤ 1 and 0.001 ≤ b ≤ 0.1), LiₐMn₂G_{b}O₄ (where 0.90 ≤ a ≤ 1 and 0.001 ≤ b ≤ 0.1), QO₂, QS₂, LiQS₂, V₂O₅, LiV₂O₅, LiIO₂, LiNiVO₄, Li_{3-f}J₂(PO₄)₃ (where 0 ≤ f ≤ 2), Li_{3-f}Fe₂(PO₄)₃ (where 0 ≤ f ≤ 2), and LiFePO₄. In the compounds above, "A" may be or include at least one of Ni, Co, Mn, or a combination thereof, "B" may be or include at least one of Al, Ni, Co, Mn, Cr, Fe, Mg, Sr, V, a rare-earth element, or a combination thereof, "D" may be or include at least one of O, F, S, P, or a combination thereof, "E" may be or include at least one of Co, Mn, or a combination thereof, "F" may be or include at least one of F, S, P, or a combination thereof, "G" may be or include at least one of Al, Cr, Mn, Fe, Mg, La, Ce, Sr, V, or a combination thereof, "Q" may be or include at least one of Ti, Mo, Mn, or a combination thereof, "I" may be or include at least one of Cr, V, Fe, Sc, Y, or a combination thereof, and "J" may be or include at least one of V, Cr, Mn, Co, Ni, Cu, or a combination thereof.

The positive electrode active material may include, for example, a lithium salt of transition metal oxide having a layered rock salt type structure among lithium transition metal oxides discussed above. The term "layered rock salt type structure" may refer to a structure in which an oxygen atom layer and a metal atom layer are alternately and regularly arranged in a <111> direction of a cubic rock salt type structure, where each atom layer forms a two-dimensional plane. The term "cubic rock salt type structure" may refer to a sodium chloride (NaCl) type structure, which is a type of crystal structure, and for example, has a structure in which face centered cubic lattices (FCCs) each formed of cations and anions are arranged displaced from each other by 1/2 (half) of a ridge of a unit lattice. The lithium transition metal oxide having the layered rock salt type structure may be or include a ternary lithium transition metal oxide, such as LiNiₓCo_{y}Al_{z}O₂ (NCA) or LiNiₓCo_{y}Mn_{z}O₂ (NCM) (where 0<x<1,0<y<1, 0<z<1, and x+y+z=1). When the positive electrode active material includes a ternary lithium transition metal oxide having the layered rock salt type structure, the unit cell CEL may have increased energy density and improved thermal stability.

The compound included in the positive electrode active material may be covered with a coating layer (not shown). The positive electrode active material may be used in a mixture of the compound and a compound to which the coating layer is added. The coating layer added to a surface of the positive electrode active material may include, for example, at least one of oxide, hydroxide, oxyhydroxide, oxycarbonate, or hydrocarbonate of a coating element discussed below. The compound that constitutes the coating layer may be amorphous or crystalline. The coating element included in the coating layer may include at least one of Mg, Al, Co, K, Na, Ca, Si, Ti, V, Sn, Ge, Ga, B, As, Zr, or a mixture thereof. The coating layer may include, for example, Li₂O-ZrO₂ (LZO). A method for forming the coating layer may be determined within any methods that do not adversely affect physical characteristics of the positive electrode active material. The method of forming the coating layer may include, for example, spray coating or immersion.

When the positive electrode active material includes nickel (Ni) as a ternary lithium transition metal oxide such as NCA or NCM, a capacity density of the unit cell CEL may increase to reduce metal elution from the positive electrode active material in a charged state. Therefore, the unit cell CEL may improve in cycle characteristics in a charged state. The language "cycle characteristics" may refer to properties that indicate the degree to which the unit cell CEL is degraded due to charge and discharge. For example, the unit cell CEL with high cycle characteristics may degrade less due to charge and discharge, while the unit cell CEL with low cycle characteristics may degrade more due to charge and discharge.

The positive electrode active material may have, for example, a spherical or oval particle shape. There is no limitation on a particle diameter and an amount of the positive electrode active material.

The solid electrolyte of the positive electrode active material layer 120 may have a particle shape. The solid electrolyte may be dispersed between the positive electrode active materials. The solid electrolyte may include a sulfide-based solid electrolyte with desired or improved lithium ionic conductivity. The sulfide-based solid electrolyte may include, for example, at least one of Li₂S-P₂S₅, Li₂S-P₂S₅-LiX (where X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂P₂S₅-LiI, Li₂S-B₂S₃, Li₂S-P₂S₅-ZₘSₙ (where m and n are each a positive integer, and "Z" is one of Ge, Zn, and Ga), Li₂S-GeS₂, Li₂S-SiS₂-Li₃PO₄, Li₂S-SiS₂-LiₚMO_{q} (where p and q are each a positive integer, and "M" is one of P, Si, Ge, B, Al, Ga, and In), Li₇₋ₓPS₆₋ₓClₓ (where 0 ≤ x ≤ 2), Li₇₋ₓPS₆₋ₓBrₓ (where 0 ≤ x ≤ 2), and Li₇₋ₓPS₆₋ₓIₓ (where 0 ≤ x ≤2).

The sulfide-based solid electrolyte may be or include an argyrodite-type compound including, for example, at least one of Li₇₋ₓPS₆₋ₓClₓ (where 0 ≤ x ≤ 2), Li₇₋ₓPS₆₋ₓBrₓ (where 0 ≤ x ≤ 2), and Li₇₋ₓPS₆₋ₓIₓ (where 0 ≤ x ≤ 2). For example, the sulfide-based solid electrolyte may be or include an argyrodite-type compound including at least one of Li₆PS₅Cl, Li₆PS₅Br, and Li₆PS₅I.

Alternatively, the sulfide-based solid electrolyte may be or include an argyrodite-type compound including Li_{7-a-c}MₐPS_{6-c}X_{c} (where 0 ≤ a ≤ 2 and 0 ≤ c ≤ 2). In the chemical formula above, X may be or include at least one of F, Br, Cl, or a combination thereof. M may be or include at least one of scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), or a combination thereof. The sulfide-based solid electrolyte may include, for example, at least one of Li₇₋ₓPS₆₋ₓClₓ(0 ≤ x ≤ 2), Li₇₋ₓPS₆₋ₓBrₓ(0 ≤ x ≤ 2), Li₇₋ₓPS₆₋ₓIₓ(0 ≤ x ≤ 2), Li_{7-y}M1_{y}PS_{6-z}M2_{z}(0 ≤ y ≤ 2, 0 ≤ z ≤ 2), and a combination thereof, wherein M1 is or includes at least one elements from Groups 3 to 15 of the Periodic Table, and wherein M2 is or includes at least one elements from Group 17 of the Periodic Table.

The argyrodite-type solid electrolyte may have a density in a range of ≥ 1.5 g/cc to ≤ 2.0 g/cc. As the argyrodite-type solid electrolyte has a density that is equal to or greater than 1.5 g/cc, it may be possible to decrease an internal resistance of an all-solid-state battery and to reduce or prevent a solid electrolyte layer from short-circuit and penetration caused by the formation of lithium dendrites. The solid electrolyte may have an elastic modulus in a range of, for example, ≥ 15 GPa to ≤ 35 GPa.

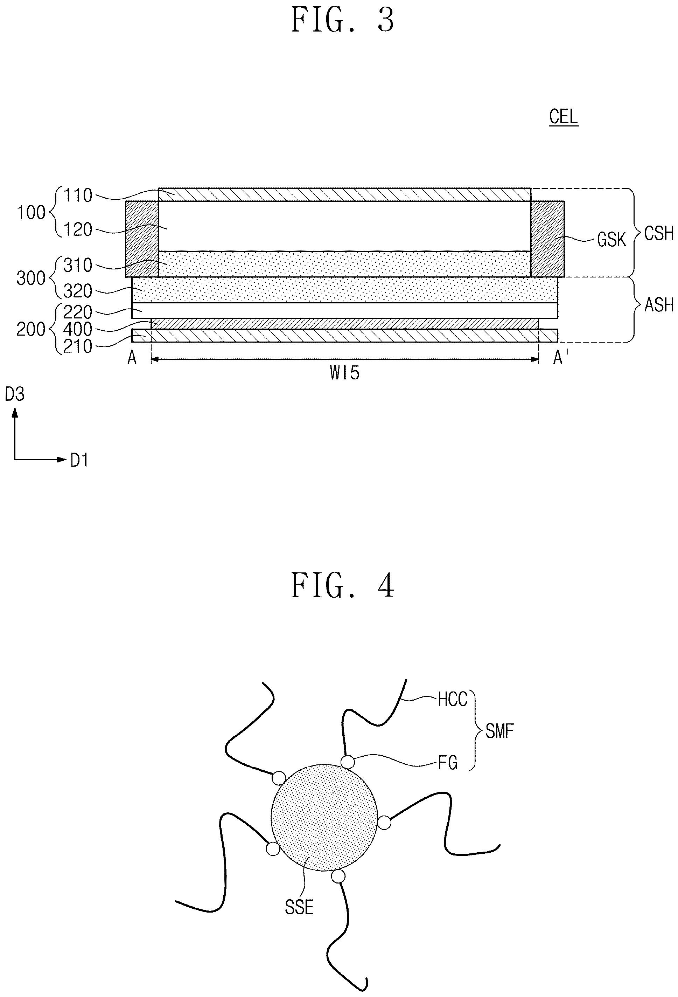

The solid electrolyte in the positive electrode active material layer 120 may be derived from a solid electrolyte composite to be described below with reference to FIG. 4.

The solid electrolyte in the positive electrode active material layer 120 may have an average particle diameter that is lower than the average particle diameters of first and second electrolytes in the solid electrolyte layer 300 which is discussed below. For example, the average particle diameter of the solid electrolyte in the positive electrode active material layer 120 may be equal to or less than 90%, 80%, 70%, 60%, 50%, 40%, 30%, or 20% of the average particle diameter of a solid electrolyte included in the solid electrolyte layer 300. The average particle diameter may be a median diameter measured with, e.g., a laser-type particle size distribution analyzer.

The positive electrode active material layer 120 may include a conductive material. The conductive material may provide conductivity without causing a chemical change of the unit cell CEL to increase conductivity of the positive electrode active material and the solid electrolyte. The conductive material may include a carbon-based material. The conductive material may include, for example, one or more of graphite, carbon black, acetylene black, carbon nano-fiber, and carbon nano-tube.

The positive electrode active material layer 120 may further include a binder. The binder may combine the positive electrode active material, the solid electrolyte, and the conductive material with each other in the positive electrode active material layer 120. The binder may include a material that improves adhesion between the positive electrode active material layer 120 and the positive electrode current collector 110. For example, the binder may include at least one of polyvinylidenefluoride, styrene-butadiene rubber (SBR), polytetrafluoroethylene, polyvinylidenefluoride, vinylidenefluoride/hexafluoropropylene copolymer, polyacrylonitrile, and polymethylmethacrylate.

Based on the total 100 parts by weight of the positive electrode active material, the solid electrolyte, the conductive material, and the binder, the positive electrode active material may be included in an amount of ≥ 90 parts by weight to ≤ 92 parts by weight in the positive electrode active material layer 120. Based on the total 100 parts by weight of the positive electrode active material, the solid electrolyte, the conductive material, and the binder, the binder may be included in an amount in a range of ≥ 0.5 parts by weight to ≤ 1.5 parts by weight in the positive electrode active material layer 120.

Based on 100 parts by weight of the solid electrolyte, the conductive material may be included in an amount in a range of ≥ 1 part by weight to ≤ 50 parts by weight in the positive electrode active material layer 120. When the conductive material is included in an amount that is less than 1 part by weight relative to 100 parts by weight of the solid electrolyte, a proportion of the conductive material may decrease to reduce an electrical conductivity of the positive electrode active material layer 120. When the conductive material is included in an amount that is greater than 50 parts by weight relative to 100 parts by weight of the solid electrolyte, a proportion of the conductive material may substantially increase to cause incomplete formation of a coating layer that covers a surface of the solid electrolyte.

The positive electrode active material layer 120 may further include an additive, such as, e.g., at least one of a filler, a coating agent, a dispersant, and an ionic conductivity agent, in addition to the positive electrode active material, the solid electrolyte, the conductive material, and the binder.

### Negative Electrode Layer 200

The negative electrode layer 200 may include a negative electrode current collector 210, and a coating layer 220 on the negative electrode current collector 210. The negative electrode current collector 210 may provide a reference surface on which the coating layer 220 is disposed. The negative electrode current collector 210 may include a material that does not react with lithium, for example, a material that does not form an alloy or a compound with lithium. For example, the negative electrode current collector 210 may include at least one of copper (Cu), stainless steel, titanium (Ti), iron (Fe), cobalt (Co), nickel (Ni), and an alloy thereof. For example, a thickness of the negative electrode current collector 210 may range from ≥ 1 µm to ≤ 20 µm, from ≥ 5 µm to ≤ 15 µm, or from ≥ 7 µm to ≤ 10 µm.

The negative electrode current collector 210 may be formed of or include one of the metals mentioned above, an alloy of two or more of the metals mentioned above, or a coating material. The negative electrode current collector 210 may have, for example, a plate or foil shape. In an example embodiment, the negative electrode current collector 210 may not be provided.

### Coating Layer 220

The coating layer 220 may induce growth of lithium metal between the coating layer 220 and the negative electrode current collector 210 when the unit cell CEL is charged. The coating layer 220 may constitute a protection layer for lithium metal, and simultaneously or contemporaneously may reduce or suppress precipitation and growth of lithium dendrites.

The coating layer 220 may include metal and carbon. For example, the coating layer 220 may include at least one metal such as or including at least one of gold (Au), platinum (Pt), palladium (Pd), silicon (Si), silver (Ag), aluminum (Al), bismuth (Bi), tin (Sn), and zinc (Zn). The coating layer 220 may include at least one carbon such as at least one of carbon black, acetylene black, furnace black, ketjen black, and graphene. In an example embodiment, the coating layer 220 may include a mixture (or composite) of carbon black and silver (Ag).

The coating layer 220 may further include an additive in addition to metal and carbon. The coating layer 220 may include at least one additive such as or including at least one of, for example, a binder, a filler, a coating agent, a dispersant, and an ionic conductivity agent.

The coating layer 220 may have a thickness that is lower than the thickness of the positive electrode active material layer 120. For example, the coating layer 220 may have a thickness that is equal to or less 50%, 40%, 30%, 20%, 10%, or 5% of that of the positive electrode active material layer 120. The thickness of the coating layer 220 may range, for example, from ≥ 1 µm to ≤ 100 µm, from ≥ 2 µm to ≤ 80 µm, from ≥ 10 µm to ≤ 50 µm, or from ≥ 5 µm to ≤ 20 µm. When the coating layer 220 has a substantially small thickness, lithium dendrites formed between the coating layer 220 and the negative electrode current collector 210 may collapse the coating layer 220 to reduce cycle characteristics of the unit cell CEL. When the coating layer 220 has a substantially large thickness, the unit cell CEL may have a reduced energy density, and an internal resistance of the unit cell CEL may increase due to the coating layer 220, thereby reducing cycle characteristics of the unit cell CEL. Although not shown, a carbon layer may further be included to increase adhesion between the coating layer 220 and the solid electrolyte layer 300.

### Solid Electrolyte Layer 300

The solid electrolyte layer 300 may be provided between the positive electrode layer 100 and the negative electrode layer 200. The solid electrolyte layer 300 may include a sulfide-based solid electrolyte with desired or improved lithium ion conductivity properties. The solid electrolyte in the solid electrolyte layer 300 may be derived from a solid electrolyte composite to be described below with reference to FIG. 4. The solid electrolyte included in the solid electrolyte layer 300 may include a material that is the same as, or different from, the material of the solid electrolyte included in the positive electrode active material layer 120.

The solid electrolyte layer 300 may include a first solid electrolyte layer 310 and a second solid electrolyte layer 320. The first solid electrolyte layer 310 may be adjacent to the positive electrode layer 100, and the second solid electrolyte layer 320 may be adjacent to the negative electrode layer 200.

Referring to FIG. 2A, the first solid electrolyte layer 310 may include a first solid electrolyte. The first solid electrolyte may have a substantially spherical or substantially oval particle shape. The first solid electrolyte may include a sulfide-based solid electrolyte. The first solid electrolyte may be in an amorphous state, a crystalline state, or a mixed state of amorphous and crystalline states. The solid electrolyte may include at least one of sulfur (S), phosphorus (P), and lithium (Li) among component elements included in the sulfide-based solid electrolyte mentioned above. For example, the solid electrolyte may be or include a material including Li₂S-P₂S₅. When Li₂S-P₂S₅ is included as the sulfide-based solid electrolyte material of the solid electrolyte, a mixing molar ratio of Li₂S and P₂S₅ may be in a range of ≥ 50:50 to ≤ 90:10.

In an example embodiment, the first solid electrolyte may include an argyrodite-type compound including, for example, at least one of Li₇₋ₓPS₆₋ₓClₓ (where 0 ≤ x ≤2), Li₇₋ₓPS₆₋ₓBrₓ (where 0 ≤ x ≤ 2), and Li₇₋ₓPS₆₋ₓIₓ (where 0 ≤ x ≤ 2). For example, the sulfide-based solid electrolyte may be or include an argyrodite-type compound including at least one of Li₆PS₅Cl, Li₆PS₅Br, and Li₆PS₅I.

Alternatively, the sulfide-based solid electrolyte may be or include an argyrodite-type compound including Li_{7-a-c}MₐPS_{6-c}X_{c} (where 0 ≤ a ≤ 2 and 0 ≤ c ≤ 2). In the chemical formula above, X may be or include at least one of F, Br, Cl, or a combination thereof. M may be or include at least one of scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), or a combination thereof. The sulfide-based solid electrolyte may include, for example, at least one of Li₇₋ₓPS₆₋ₓClₓ(0 ≤ x ≤ 2), Li₇₋ₓPS₆₋ₓBrₓ(0 ≤ x ≤ 2), Li₇₋ₓPS₆₋ₓIₓ(0 ≤ x ≤ 2), Li_{7-y}M1_{y}PS_{6- z}M2_{z}(O ≤ y ≤ 2, 0 ≤ z ≤ 2), and a combination thereof, wherein M1 is or includes at least one elements from Groups 3 to 15 of the Periodic Table, and wherein M2 is or includes at least one elements from Group 17 of the Periodic Table.

The argyrodite-type solid electrolyte may have a density in a range of ≥ 1.5 g/cc to ≤ 2.0 g/cc. As the argyrodite-type solid electrolyte has a density that is equal to or greater than 1.5 g/cc, it may be possible to decrease an internal resistance of an all-solid-state battery and to reduce or prevent a solid electrolyte layer from short-circuit and penetration caused by the formation of lithium dendrites. The first solid electrolyte may have a modulus in a range of, for example, ≥ 15 GPa to ≤ 35 GPa.

The first solid electrolyte layer 310 may further include a binder. The binder included in the first solid electrolyte layer 310 may include, for example, at least one of styrene-butadiene rubber (SBR), polytetrafluoroethylene, polyvinylidenefluoride, or polyethylene, but the present disclosure is not limited thereto. The binder of the first solid electrolyte layer 310 may be the same as, or different from, the binder of the positive electrode active material layer 120 or that of the coating layer 220.

The second solid electrolyte layer 320 may include a second solid electrolyte. The second solid electrolyte may have a substantially spherical or oval particle shape.

The second solid electrolyte may include a sulfide-based solid electrolyte. A description of the second solid electrolyte may be the same as, or similar to, the description of the first solid electrolyte. In an example embodiment, the second solid electrolyte may have substantially the same composition as the composition of the first solid electrolyte. Alternatively, the second solid electrolyte may have a similar composition to the composition of the first solid electrolyte.

The second solid electrolyte may be in direct contact with the coating layer 220. Thus, the second solid electrolyte may reduce or suppress lithium dendrites formed between the coating layer 220 and the negative electrode current collector 210. The second solid electrolyte may effectively reduce or suppress negative electrode side reactions. Therefore, the all-solid-state battery according to examples of the present disclosure may improve the cell performance.

The first solid electrolyte layer 310 may have a first thickness TK1, and the second solid electrolyte layer 320 may have a second thickness TK2. The first thickness TK1 and the second thickness TK2 may be the same as or different from each other. In an example embodiment, the first thickness TK1 may be greater than the second thickness TK2. For example, the first thickness TK1 may be in a range of ≥ 1.1 to 5 times the second thickness TK2.

Referring back to FIGS. 1, 2A, and 2B, the positive electrode layer 100 and the first solid electrolyte layer 310 may constitute a positive electrode mixture layer CSH. The negative electrode layer 200 and the second solid electrolyte layer 320 may constitute a negative electrode mixture layer ASH. The positive electrode mixture layer CSH may be stacked on the negative electrode mixture layer ASH.

The negative electrode mixture layer ASH and the positive electrode mixture layer CSH may have areas that are different from each other. For example, the area of the negative electrode mixture layer ASH may be greater than the area of the positive electrode mixture layer CSH. The positive electrode mixture layer CSH may, e.g., completely inwardly overlap the negative electrode mixture layer ASH.

In an example embodiment of the present disclosure, the first solid electrolyte layer 310 may have substantially the same area as the area of the positive electrode layer 100. The second solid electrolyte layer 320 may have substantially the same area as the area of the negative electrode layer 200.

For example, the positive electrode mixture layer CSH may have a first width WI1 in a first direction D1. The negative electrode mixture layer ASH may have a second width WI2 in the first direction D1. The first width WI1 may be less than the second width WI2. The positive electrode mixture layer CSH may have a third width WI3 in a second direction D2. The negative electrode mixture layer ASH may have a fourth width WI4 in the second direction D2. The third width WI3 may be less than the fourth width WI4.

The unit cell CEL according to examples of the present embodiment may be fabricated by forming the negative electrode mixture layer ASH on a first carrier film, forming the positive electrode mixture layer CSH on a second carrier film, and then laminating the negative electrode mixture layer ASH and the positive electrode mixture layer CSH.

The unit cell CEL according to examples of the present embodiment may further include a gasket GSK. The gasket GSK may be provided to surround the positive electrode mixture layer CSH. A difference in area between the negative electrode mixture layer ASH and the positive electrode mixture layer CSH may produce a step difference on a lateral surface of the unit cell CEL, and the gasket GSK may fill the step difference. The gasket GSK may surround four lateral surfaces of the positive electrode mixture layer CSH. For example, a thickness of the gasket GSK may be substantially the same as or less than the thickness of the positive electrode mixture layer CSH. In an example embodiment, the positive electrode current collector 110 may be provided at a height (or level) that is higher than the height of the gasket GSK.

The positive electrode current collector 110 may include a positive electrode tab CTB. The positive electrode tab CTB may be a protruding region of the positive electrode current collector 110. In an example embodiment, the positive electrode tab CTB may protrude in the second direction D2.

The negative electrode current collector 210 may include a negative electrode tab ATB. The negative electrode tab ATB may be a protruding region of the negative electrode current collector 210. In an example embodiment, the negative electrode tab ATB may protrude in a direction opposite to the second direction D2.

In the example embodiment that follows, a detailed description of technical features repetitive to those discussed above with reference to FIGS. 1, 2A, and 2B is omitted, and a difference thereof is discussed in detail.

FIG. 3 illustrates a cross-sectional view taken along line A-A' of FIG. 1, showing an all-solid-state battery according to an example embodiment of the present disclosure. Referring to FIG. 3, the negative electrode layer 200 of the unit cell CEL may further include a lithium metal layer 400 between the negative electrode current collector 210 and the coating layer 220. The lithium metal layer 400 may have an increased thickness when the unit cell CEL is charged. The coating layer 220 may constitute a protection layer for the lithium metal layer 400, and may simultaneously or contemporaneously reduce or suppress growth of lithium dendrites from the lithium metal layer 400.

The lithium metal layer 400 may be or include a metal thin layer including lithium or lithium alloy. The lithium alloy may be or include, for example, at least one of Li-Al alloy, Li-Sn alloy, Li-In alloy, Li-Ag alloy, Li-Au alloy, Li-Zn alloy, Li-Ge alloy, or Li-Si alloy, but any suitable lithium alloys may be applicable. The lithium metal layer 400 may include lithium, or one of the alloys mentioned above. Alternatively, the lithium metal layer 400 may include various types of alloy.

In another example embodiment of the present disclosure, the lithium metal layer 400 in the negative electrode 200 may be provided between the negative electrode current collector 210 and the coating layer 220, for example, before the unit cell CEL is assembled. When the lithium metal layer 400 is disposed between the negative electrode current collector 210 and the coating layer 220 before the unit cell CEL is assembled, the lithium metal layer 400 may be a metal layer including lithium, and may thus constitute a lithium reservoir. For example, before the unit cell CEL is assembled, a lithium foil may be placed between the negative electrode current collector 210 and the coating layer 220.

When the lithium metal layer 400 is deposited by charging after assembling the unit cell CEL, the energy density of the unit cell CEL may be increased because the unit cell CEL does not include the lithium metal layer at the time of assembling. When the unit cell CEL is charged, the charging capacity of the coating layer 220 may be exceeded. That is, the coating layer 220 is overcharged. In the early stage of charging, lithium may be occluded in the coating layer 220. When charging is performed in excess of the capacity of the coating layer 220, for example, lithium may be deposited between the negative electrode coating layer 220 and the negative electrode current collector 210. The metal layer 400 may be formed by the precipitated lithium.

The lithium metal layer 400 may be mainly composed of or include lithium (i.e., metal lithium). During discharge, lithium in the lithium metal layer 400 may be ionized and migrate to the positive electrode 100. In other words, lithium may be used as the negative electrode active material in the unit cell CEL. In addition, because the coating layer 220 covers the lithium metal layer 400, the coating layer 220 may protect the lithium metal layer 400 and reduce or suppress precipitation growth of lithium dendrite. Accordingly, the coating layer 220 may reduce or suppress a short circuit and a decrease in capacity of the unit cell CEL, and may improve the cycle characteristics of the unit cell.

When the lithium metal layer 400 is formed by charging after assembly of the unit cell CEL, the negative electrode 200 (including the negative electrode current collector 210, the coating layer 220, and a region between them) may be or include a Li-free region that does not include lithium (Li) in an initial state or a state after complete discharge of the unit cell CEL.

The lithium metal layer 400 may have a fifth width WI5 in the first direction D1. The fifth width WI5 may be the same as or greater than the first width WI1. The fifth width WI5 may be the same as or less than the second width WI2. For example, the fifth width WI5 may be greater than the first width WI1 and less than the second width WI2.

The negative electrode 200 may further include a thin layer provided between the negative electrode current collector 210 and the coating layer 220. The thin layer may be provided on one side of the negative electrode current collector 210 to form an alloy with lithium.

The thin layer may include, for example, an element capable of forming an alloy with lithium. The element capable of forming an alloy with lithium may include, for example, at least one of gold, silver, zinc, tin, indium, silicon, aluminum, or bismuth, but the present disclosure is not limited thereto, and any suitable element capable of forming an alloy with lithium in the art may be utilized. The thin layer may be formed of or include one of the metals discussed above or an alloy of various types of metals.

As the thin layer is disposed on one side of the negative electrode current collector 210, a plated shape of the lithium metal layer 400 deposited between the thin layer and the coating layer 220 may be more planarized, and the all-solid-state battery may improve in cycle characteristics.

A thickness of the thin layer may range from, for example, ≥ 1 nm to ≤ 800 nm, ≥ 10 nm to ≤ 700 nm, ≥ 50 nm to ≤ 600 nm, or ≥ 100 nm to ≤ 500 nm. When the thickness of the thin layer is less than 1 nm, it may be difficult to achieve performance caused by the thin layer. When the thickness of the thin layer is substantially large, the thin layer may absorb lithium to reduce a deposition amount of lithium in the negative electrode 200, thereby reducing an energy density and cycle characteristics of the all-solid-state battery. For example, vapor deposition, sputtering, or plating may be employed to form the thin layer on the negative electrode current collector 210, but the present disclosure is not limited thereto and any suitable methods capable of forming a thin layer in the art may be utilized.

FIG. 4 illustrates a cross-sectional view of a solid electrolyte composite according to example embodiments of the disclosure. Hereinafter, a solid electrolyte composite, a positive electrode active material slurry including the solid electrolyte composite, and a solid electrolyte slurry including the solid electrolyte composite is described in detail below with reference to FIG. 4.

### Solid Electrolyte Composite

Referring to FIG. 4, a solid electrolyte composite according to example embodiments of the present disclosure may include a sulfide-based solid electrolyte (SSE), and a surface modifier (SMF) on a surface of the sulfide-based solid electrolyte SSE.

The sulfide-based solid electrolyte SSE may include a material that is the same as, or different from, the material of the solid electrolyte included in the positive electrode active material layer 120 described above with reference to FIG. 1. The sulfide-based solid electrolyte SSE may have substantially a spherical or oval particle shape.

The sulfide-based solid electrolyte SSE may include, for example, at least one of Li₂S-P₂S₅, Li₂S-P₂S₅-LiX (where X is or includes a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are each a positive integer, and "Z" is or includes at least one of Ge, Zn, and Ga), Li₂S-GeS₂, Li₂S-SiS₂-Li₃PO₄, Li₂S-SiS₂-LiₚMO_{q} (where p and q are each a positive integer, and "M" is or includes at least one of P, Si, Ge, B, Al, Ga, and In), Li₇₋ₓPS₆₋ₓClₓ (where 0 ≤ x ≤ 2), Li₇₋ₓPS₆₋ₓBrₓ (where 0 ≤ x ≤ 2), and Li₇₋ₓPS₆₋ₓIₓ (where 0 ≤ x ≤2).

The sulfide-based solid electrolyte (SSE) may be or include an argyrodite-type compound including, for example, at least one of Li₇₋ₓPS₆₋ₓClₓ (where 0 ≤ x ≤ 2), Li₇₋ₓPS₆₋ₓBrₓ (where 0 ≤ x ≤ 2), and Li₇₋ₓPS₆₋ₓIₓ (where 0 ≤ x ≤ 2). For example, the sulfide-based solid electrolyte may be or include an argyrodite-type compound including at least one of Li₆PS₅Cl, Li₆PS₅Br, and Li₆PS₅I.

Alternatively, the sulfide-based solid electrolyte may be or include an argyrodite-type compound including Li_{7-a-c}MₐPS_{6-c}X_{c} (where 0 ≤ a ≤ 2 and 0 ≤ c ≤ 2). In the chemical formula above, X may be or include at least one of F, Br, Cl, or a combination thereof. M may be or include at least one of scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), or a combination thereof.

The average particle diameter (D50) of the sulfide-based solid electrolyte SSE may be in a range of, for example, ≥ 0.5 µm to ≤ 20 µm, ≥ 1 µm to ≤ 15 µm, ≥ 2 µm to ≤ 10 µm, or ≥ 2 µm to ≤ 5 µm. The average particle diameter (D50) may be a median diameter measured with, e.g., a laser-type particle size distribution analyzer.

The surface modifier SMF may include a linear hydrocarbon chain HCC, and a polar functional group(FG bonded to the linear hydrocarbon chain HCC. As used herein, "attached" may refer to a state in which the polar functional group FG physically and/or chemically interacts with, is adsorbed onto, or is electrostatically associated with the surface of the sulfide-based solid electrolyte SSE, and does not require covalent bonding. The polar functional group FG may attach the surface modifier SMF onto the surface of the sulfide-based solid electrolyte SSE through interaction with the sulfide-based solid electrolyte SSE. For example, forces such as electrostatic attraction, ion-dipole interaction, coordination bonding, or dispersion forces, may act between the sulfide-based solid electrolyte SSE and the polar functional group FG.

For example, anions (e.g., S²⁻, Cl⁻, Br , I⁻) or lithium cations (Li⁺) present in the sulfide-based solid electrolyte SSE may form an electrostatic attraction with the partial charge of the polar functional group FG. For example, a lithium cation of a sulfide-based solid electrolyte SSE may attract a partial negative charge of a polar functional group FG, or an anion of a sulfide-based solid electrolyte SSE may attract a partial positive charge of the polar functional group FG. Alternatively, a lithium cation (Li⁺) present in the sulfide-based solid electrolyte SSE may form an ion-dipole interaction with the dipole of the polar functional group FG. Alternatively, the polar functional group FG may form a direct coordination bond with a lithium ion, or a van der Waals attraction may act between the polar functional group FG and the solid electrolyte SSE.

The polar functional group FG can be directly attached to the surface of the sulfide-based solid electrolyte SSE through the aforementioned attractive forces. That is, the surface of the sulfide-based solid electrolyte SSE may be in direct contact with the polar functional group FG.

The polar functional group FG is not particularly limited as long as the polar functional group FG exhibits polarity and has low reactivity. For example, the polar functional group FG may include at least one of a thiol group, a hydroxyl group, an amine group, an aldehyde group, an acetic acid group, an ester group, or a combination thereof. In an example embodiment, the polar functional group FG may include a thiol group.

The linear hydrocarbon chain HCC may limit contact between the sulfide-based solid electrolyte SSE and the solvent. The solid electrolyte particles may be brought into contact with a solvent in the process of manufacturing the positive electrode 100 or the solid electrolyte layer 300. When the contact area between the sulfide-based solid electrolyte SSE and the solvent increases, the solid electrolyte particles may degrade due to chemical reactions between the solid electrolyte particles and the solvent. The linear hydrocarbon chain HCC may limit the contact between the solvent and the sulfide-based solid electrolyte SSE particles to reduce or prevent degradation of the sulfide-based solid electrolyte SSE and enhance its lifetime.

The linear hydrocarbon chain HCC may have at least 3 carbon atoms. For example, the linear hydrocarbon chain HCC may have ≥ 3 to ≤ 30, ≥ 4 to ≤ 20, or ≥ 5 to ≤ 15 carbon atoms. When the number of carbon atoms in the hydrocarbon chain HCC is too small, the surface modifier SMF may not effectively limit the contact between the solvent and the solid electrolyte SSE particles. When the number of carbon atoms in the hydrocarbon chain HCC is too large, the dispersibility of the solid electrolyte SSE may decrease, and the viscosity of the slurry may become substantially high. When the number of carbon atoms in the linear hydrocarbon chain satisfies the range described above, the sulfide-based solid electrolyte SSE may exhibit desired or improved dispersibility along with desired or improved lifetime characteristics.

For example, the surface modifier SMF may include CH₃(CH₂)ₙR (where 4 ≤ n ≤ 14, and R is or includes at least one of SH, OH, NH₂, COOH, COO, COH, or a combination thereof). In an example embodiment, the surface modifier SMF may include CH₃(CH₂)ₙSH (where 5 ≤ n ≤ 8).

In some example embodiments of the present disclosure, the surface modifier SMF may have a boiling point in a range of 250° C or lower. For example, the boiling point of the surface modifier SMF may be in a range of ≥ 120° C to ≤ 250° C, ≥ 130° C to ≤ 220° C, or ≥ 150° C to ≤ 200° C. When the surface modifier SMF has a low boiling point as described above, the surface modifier SMF may be vaporized and removed during the manufacturing process of the positive electrode 100 or the solid electrolyte layer 300 for an all-solid-state battery.

In other words, the surface modifier SMF may protect the sulfide-based solid electrolyte from the solvent during the manufacturing process of the positive electrode 100 or the solid electrolyte layer 300, and may then be vaporized and removed along with the solvent.

As a result, the positive electrode 100 or the solid electrolyte layer 300 manufactured using the solid electrolyte composite according to the present disclosure may not include the surface modifier SMF. That the positive electrode 100 or the solid electrolyte layer 300 does not include the surface modifier SMF may indicate that the surface modifier SMF is either completely absent, or present in an extremely or substantially small amount (e.g., 0.01 wt% or less).

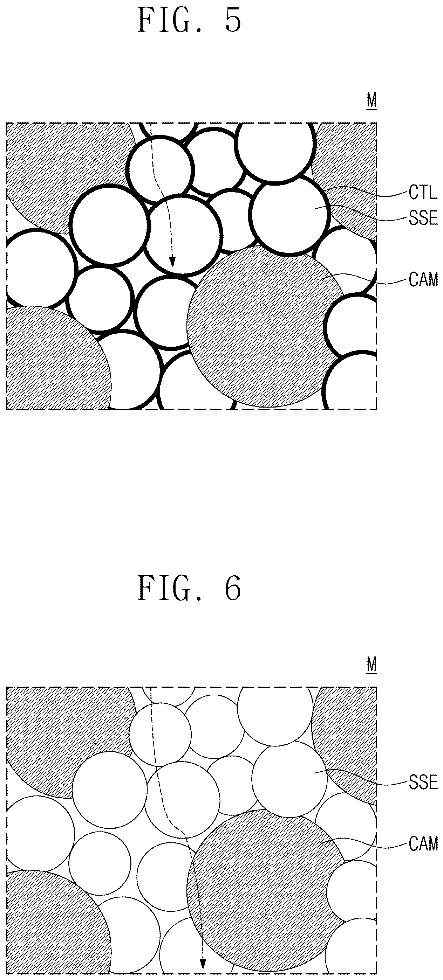

FIG. 5 illustrates an enlarged cross-sectional view of the "M" region in FIG. 2A, showing a positive electrode active material layer 120 according to a comparative example of the present disclosure. Referring to FIG. 5, the positive electrode active material layer 120 according to a comparative example may include a positive electrode active material CAM and a sulfide-based solid electrolyte SSE, wherein the sulfide-based solid electrolyte SSE includes a coating layer CTL. The coating layer CTL is included to protect the sulfide-based solid electrolyte SSE from the solvent, and may be or include a polymer or oligomer coating layer or an inorganic coating layer.

Unlike the surface modifier of examples of the present disclosure, the polymer or inorganic coating layer CTL can remain stable even at temperatures of 200° C or higher. Accordingly, the polymer or inorganic coating layer CTL may remain in the manufactured positive electrode 100 without being decomposed or vaporized during the manufacturing process of the positive electrode 100 for an all-solid-state battery. The coating layer CTL remaining in the positive electrode 100 may constitute a resistance and reduce the ionic conductivity of the positive electrode 100.

Similarly, in the case where the solid electrolyte layer 300 is manufactured using the solid electrolyte that includes the polymer coating layer or the inorganic coating layer CTL, the coating layer CTL may remain in the solid electrolyte layer 300, and reduce the ionic conductivity of the solid electrolyte layer.

FIG. 6 illustrates an enlarged cross-sectional view of the "M" region in FIG. 2A, showing a positive electrode active material layer 120 according to an example embodiment of the present disclosure. Referring to FIG. 6, the positive electrode active material layer 120 manufactured using the solid electrolyte composite of the present disclosure may include a positive electrode active material CAM and a sulfide-based solid electrolyte SSE, and may no longer include a surface modifier. The surface modifier having a low boiling point may vaporize during the coating and drying process of the positive electrode active material slurry. Consequently, the surface modifier may no longer remain in the positive electrode active material layer 120. Since the positive electrode active material layer 120 according to an example embodiment of the present disclosure does not include a surface modifier that constitutes a resistance, the positive electrode active material layer 120 according to an example embodiment of the present disclosure can exhibit desired or improved ion conductivity.

Similarly, in the case where the solid electrolyte layer 300 is manufactured using the solid electrolyte composite according to examples of the present disclosure, the solid electrolyte layer 300 may not contain a surface modifier and can therefore exhibit desired or improved ion conductivity.

### Method for Manufacturing a Solid Electrolyte Composite

The solid electrolyte composite according to example embodiments of the present disclosure may be manufactured through a process of mixing the sulfide-based solid electrolyte SSE and the surface modifier SMF. The mixing may be carried out by a dry process without a solvent, or by a wet process in the presence of a solvent.

When the mixing is carried out by wet process, the solvent may be or include an organic solvent having a nonpolar or weak polarity. For example, the solvent may include at least one of xylene, benzene, toluene, pentane, hexane, cyclohexane, octyl acetate, isobutyl isobutyrate or a combination thereof. In one example embodiment the solvent may include octyl acetate.

The mixing process described above may be performed simultaneously or contemporaneously with the preparation of the positive electrode active material slurry, or may be performed prior to the preparation of the positive electrode active material slurry. For example, after a solid electrolyte composite is prepared by mixing a sulfide-based solid electrolyte SSE and a surface modifier SMF, a positive electrode active material slurry can be prepared by mixing the solid electrolyte composite and the positive electrode active material in the presence of solvent. Alternatively, the sulfide-based solid electrolyte SSE, the surface modifier SMF, and the positive electrode active material may be simultaneously or contemporaneously added to a solvent and mixed to prepare a solid electrolyte composite and a positive electrode active material slurry at the same time.

Similarly, the process of mixing the sulfide-based solid electrolyte SSE and the surface modifier SMF may performed simultaneously or contemporaneously with the preparation of the solid electrolyte slurry, or may be performed prior to the preparation of the solid electrolyte slurry. For example, after a solid electrolyte composite is prepared by mixing a sulfide-based solid electrolyte SSE and a surface modifier SMF, a solid electrolyte slurry can be prepared by mixing the solid electrolyte composite and a binder in the presence of solvent. Alternatively, the sulfide-based solid electrolyte SSE, the surface modifier SMF, and the binder may be simultaneously or contemporaneously added to a solvent and mixed to prepare a solid electrolyte composite and a solid electrolyte slurry at the same time.

Hereinafter, the positive electrode active material slurry and the solid electrolyte slurry for an all-solid-state battery including the solid electrolyte composite according to examples the present disclosure is described in more detail.

### Positive Electrode Active Material Slurry

The positive electrode active material slurry according to example embodiments of the present disclosure may include a positive electrode active material, a solid electrolyte composite, and a solvent.

The positive electrode active material of the positive electrode active material slurry may be the same as or similar to the positive electrode active materials included in the above-described positive electrode active material layer 120. For example, the positive electrode active material may include a material that can reversibly absorb and desorb lithium ions. The positive electrode active material may include a plurality of particles. For example, the positive electrode active material may include lithium transition metal oxide (e.g., at least one of lithium cobalt oxide (LCO), lithium nickel oxide, lithium nickel cobalt oxide, lithium nickel cobalt aluminum oxide (NCA), lithium nickel cobalt manganese oxide (NCM), lithium manganate, or lithium iron phosphate), nickel sulfide, copper sulfide, lithium sulfide, iron oxide, or vanadium oxide, but the present disclosure is not limited thereto. The positive electrode active material may be used alone or in a mixture of two or more compounds.

The solid electrolyte composite of the positive electrode active material slurry may be or include the solid electrolyte composite described above with reference to FIG. 4. For example, the solid electrolyte composite may include a sulfide-based solid electrolyte and a surface modifier on a surface of the sulfide-based solid electrolyte.

The sulfide-based solid electrolyte may be or include an argyrodite-type compound including, for example, at least one of Li₇₋ₓPS₆₋ₓClₓ (where 0 ≤ x ≤ 2), Li₇₋ₓPS₆₋ₓBrₓ (where 0 ≤ x ≤ 2), and Li₇₋ₓPS₆₋ₓIₓ (where 0 ≤ x ≤ 2). For example, the sulfide-based solid electrolyte may be or include an argyrodite-type compound including at least one of Li₆PS₅Cl, Li₆PS₅Br, and Li₆PS₅I.

Alternatively, the sulfide-based solid electrolyte may be or include an argyrodite-type compound including Li_{7-a-c}MₐPS_{6-c}X_{c} (where 0 ≤ a ≤ 2 and 0 ≤ c ≤ 2). In the chemical formula above, X may be or include at least one of F, Br, Cl, or a combination thereof. M may be or include at least one of scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), or a combination thereof.

The sulfide-based solid electrolyte may have a smaller average particle diameter (D50) than the positive electrode active material. When the average particle diameter of the sulfide-based solid electrolyte is smaller than the average particle diameter of the positive electrode active material, the solid electrolyte particles can be more uniformly distributed among the positive electrode active materials particles, thereby improving the ionic conductivity and structural stability of the positive electrode. The average particle diameter may be a median diameter measured with a laser-type particle size distribution analyzer.

The surface modifier may include a linear hydrocarbon chain and a polar functional group bonded to the linear hydrocarbon chain. In one example embodiment, the polar functional group may be bonded to one terminal of the linear hydrocarbon chain. The polar functional group may include, for example, at least one of a thiol group, a hydroxyl group, an amine group, an aldehyde group, an acetic acid group, an ester group, or a combination thereof. The linear hydrocarbon chain may be, for example, a linear hydrocarbon chain having ≥ 3 to ≤ 30, ≥ 4 to ≤ 20 or ≥ 5 to ≤ 15 carbon atoms. The boiling point of the surface modifier may be in a range of 250° C or lower.

The solvent may be or include an organic solvent having non-polarity or weak polarity. For example, the solvent may include at least one of xylene, benzene, toluene, pentane, hexane, cyclohexane, octyl acetate, isobutyl isobutyrate or a combination thereof. In one example embodiment, the solvent may include octyl acetate.

Even when a nonpolar solvent or a weakly polar solvent is included as the solvent for the positive electrode active material slurry, when the contact area between the sulfide-based solid electrolyte and the solvent increases, decomposition or degradation of the sulfide component can be accelerated. In addition, upon contact with an organic solvent, the sulfide-based solid electrolyte may undergo physical changes such as contraction or expansion. The surface modifier according to example embodiments of the present disclosure can limit contact between the solvent and the sulfide-based solid electrolyte and reduce or prevent degradation of the sulfide-base solid electrolyte.

The positive electrode active material slurry may further include a conductive material. The conductive material may include, for example, at least one of graphite, carbon black, acetylene black, carbon nanofibers, or carbon nanotubes.

The positive electrode active material layer 120 may further include a binder. The binder may combine the positive electrode active material, the solid electrolyte, and the conductive material with each other in the positive electrode active material layer 120. The binder may include a material that improves adhesion between the positive electrode active material layer 120 and the positive electrode current collector 110. For example, the binder may include at least one of polyvinylidenefluoride, styrene-butadiene rubber (SBR), polytetrafluoroethylene, polyvinylidenefluoride, vinylidenefluoride/hexafluoropropylene copolymer, butyl acrylate, polyacrylonitrile, and polymethylmethacrylate.

The positive electrode active material slurry can be applied onto a positive electrode current collector, and then dried to form the positive electrode active material layer 120. The drying temperature of the positive electrode active material slurry may be in a range of, for example, ≥ 50° C to ≤ 150° C, or ≥ 150° C to ≤ 250° C. At the drying temperature, the solvent and the surface modifier in the positive electrode active material slurry may be vaporized and removed. That is, the positive electrode active material layer 120 manufactured using the positive electrode active material slurry may not contain a solvent and a surface modifier.

### Solid Electrolyte Slurry

A solid electrolyte slurry according to example embodiments of the disclosure may include a solid electrolyte composite and a solvent.

The solid electrolyte composite may be the solid electrolyte composite described above with reference to FIG. 4. For example, the solid electrolyte composite may include a sulfide-based solid electrolyte and a surface modifier on a surface of the sulfide-based solid electrolyte.

The sulfide-based solid electrolyte may be or include an argyrodite-type compound including, for example, at least one of Li₇₋ₓPS₆₋ₓClₓ (where 0 ≤ x ≤ 2), Li₇₋ₓPS₆₋ₓBrₓ (where 0 ≤ x ≤ 2), and Li₇₋ₓPS₆₋ₓIₓ (where 0 ≤ x ≤2). Alternatively, the sulfide-based solid electrolyte may be or include an argyrodite-type compound including Li_{7-a-c}MₐPS_{6-c}X_{c} (where 0 ≤ a ≤ 2 and 0 ≤ c ≤ 2). In the chemical formula above, X may be or include at least one of F, Br, Cl, or a combination thereof. M may be or include at least one of scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), or a combination thereof.

The sulfide-based solid electrolyte contained in the solid electrolyte slurry may have a larger average particle diameter (D50) than the sulfide-based solid electrolyte contained in the positive electrode active material slurry. For example, the average particle diameter of the solid electrolyte of the solid electrolyte slurry may be in a range of ≥ 110% or more, ≥ 120% or more, ≥ 150% or more, or ≥ 200% or more, of the average particle diameters of the solid electrolytes of the positive electrode active material slurry. The average particle diameter may be a median diameter measured with, e.g., a laser-type particle size distribution analyzer.

The surface modifier may include a linear hydrocarbon chain and a polar functional group bonded to the linear hydrocarbon chain. The polar functional group may include, for example, at least one of a thiol group, a hydroxyl group, an amine group, an aldehyde group, an acetic acid group, an ester group, or a combination thereof. The linear hydrocarbon chain may be, for example, a linear hydrocarbon chain having ≥ 3 to ≤ 30, ≥ 4 to ≤ 20 or ≥ 5 to ≤ 15 carbon atoms. The boiling point of the surface modifier may be in a range of 250° C or lower.

The solvent may be or include an organic solvent having non-polarity or weak polarity. For example, the solvent may include at least one of xylene, benzene, toluene, pentane, hexane, cyclohexane, octyl acetate, isobutyl isobutyrate or a combination thereof. In one example embodiment, the solvent may include octyl acetate.

As described above, the surface modifier can limit contact between the solvent and the sulfide-based solid electrolyte to reduce or prevent degradation of the sulfide-base solid electrolyte.

The solid electrolyte slurry may further include a binder. Examples of the binder contained in the solid electrolyte slurry include, but are not limited to, styrene-butadiene rubber (SBR), polytetrafluoroethylene, polyvinylidene fluoride, butyl acrylate and polyethylene. The binder of the solid electrolyte slurry may be the same as, or different from, the binder included in the positive electrode active material slurry.

The solid electrolyte slurry can be applied onto a substrate, a positive electrode active material layer 120, or a coating layer 220, and then dried to form the solid electrolyte layer 300. The drying temperature of the solid electrolyte slurry may be in a range of, for example, ≥ 50° C to ≤ 150° C, or ≥ 150° C to ≤ 250° C. At the above drying temperature, the solvent and the surface modifier in the solid electrolyte slurry may be vaporized and removed. That is, the solid electrolyte layer 300 manufactured using the solid electrolyte slurry may not contain a solvent and a surface modifier.

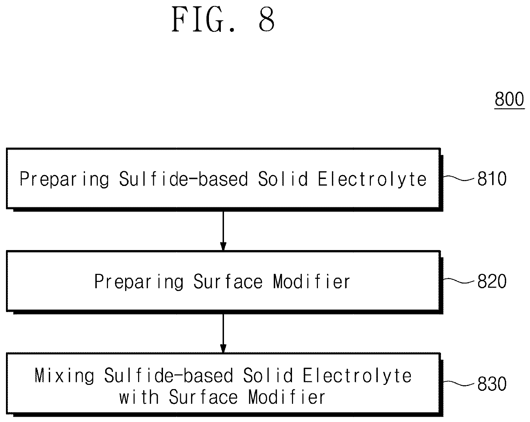

FIG. 8 is a flow chart illustrating a method of manufacturing a solid electrolyte composite, according to an example embodiment. In FIG. 8, the method 800 includes operation 810, which includes preparing a sulfide-based solid electrolyte. For example, the sulfide-based solid electrolyte includes at least one of Li₇₋ₓPS₆₋ₓClₓ(where 0≤x≤2), Li₇₋ₓPS_{6- x}Brₓ (where 0≤x≤2), Li₇₋ₓPS₆₋ₓIₓ (where 0≤x≤2), Li_{7-y}M1_{y}PS_{6-z}M2_{z} (where 0≤y≤2, and 0≤z≤2), and a combination thereof, wherein M1 includes at least one element from Groups 3 to 15 of the Periodic Table, and M2 includes at least one element from Group 17 of the Periodic Table.

Operation 820 includes preparing a surface modifier. For example, the surface modifier includes a linear hydrocarbon chain and a polar functional group bonded to the linear hydrocarbon chain. In an example, the polar functional group includes at least one of a thiol group, a hydroxyl group, an amine group, an aldehyde group, an acetic acid group, an ester group, and a combination thereof. In another example, the hydrocarbon chain has ≥ 5 to ≤ 15 carbon atoms.

Operation 830 includes mixing the sulfide-based solid electrolyte with the surface modifier. For example, the surface modifier is attached to the surface of the sulfide-based solid electrolyte via the polar functional group.

Examples of the present disclosure are discussed below in detail through embodiments. These example embodiments, however, are provided to illustrate the present disclosure, and the scope of the present disclosure is not limited to these embodiments.

### Embodiment 1

### Manufacture of Positive Electrode Active Material Slurry:

LiNi_{0.8}Co_{0.1}Al_{0.1}O₂ (NCA) powder as a positive electrode active material, argyrodite-type solid electrolyte (Li₆PS₅Cl) powder as a sulfide-based solid electrolyte, and CH₃(CH₂)₇SH (1-octanethiol) as a surface modifier were prepared. Polyvinylidene fluoride/hexafluoropropylene copolymer (PVdF/HFP) was prepared as a binder, and carbon nanofiber (CNF) was prepared as a conductive material. A positive electrode active material slurry was prepared by mixing these materials in an octyl acetate solvent at a weight ratio of positive electrode active material : solid electrolyte : surface modifier : conductive material : binder = 80:16:0.15:1.5:2.5.

### Manufacture of Positive Electrode:

The positive electrode active material slurry was coated on an aluminum positive electrode current collector and dried at 90° C for 5 hours to prepare a positive electrode.

### Manufacture of Solid Electrolyte Layer:

A solid electrolyte slurry was prepared by adding an argyrodite-type solid electrolyte (Li₆PS₅Cl) to an isobutyl isobutyrate binder solution containing a butyl acrylate-based polymer. The mixing ratio of the solid electrolyte and the binder was 98.7:1.3 by weight. The prepared solid electrolyte slurry was applied to a release polytetrafluoroethylene film and dried at 60° C for 2 hours to form a solid electrolyte layer.

### Manufacture of All-Solid-State Battery:

A coin half-cell was manufactured using the positive electrode manufactured above, a counter electrode (lithium metal), and the solid electrolyte layer manufactured above.

### Comparative Embodiment 1

A positive electrode active material slurry was prepared without including a surface modifier by mixing a positive electrode active material, a solid electrolyte, a conductive material, and a binder at a weight ratio of positive electrode active material : solid electrolyte : conductive material : binder=80:16:1.5:2.5. Except for this difference, the positive electrode active material slurry, positive electrode, solid electrolyte layer, and all-solid-state battery were manufactured in the same manner as in Embodiment 1.

### Comparative Embodiment 2

### Manufacture of Positive Electrode Active Material Slurry:

A polymer coating solution was spray-coated on argyrodite-type solid electrolyte (Li₆PS₅Cl) powder, and then dried at 60° C for 2 hours to prepare a solid electrolyte having a polymer coating layer formed thereon.

A positive electrode slurry was prepared by mixing a positive electrode active material LiNi_{0.8}Co_{0.1}Al_{0.1}O₂ (NCA), the solid electrolyte prepared above, a CNF conductive material, and polyvinylidene fluoride/hexafluoropropylene copolymer (PVdF/HFP) binder at a weight ratio of positive electrode active material : solid electrolyte : conductive material : binder=80:16:1.5:2.5.

### Manufacture of All-Solid-State Battery:

The positive electrode, solid electrolyte layer, and all-solid-state battery were manufactured in the same manner as in Embodiment 1

### Evaluation Example 1: Evaluation of Solid Electrolyte

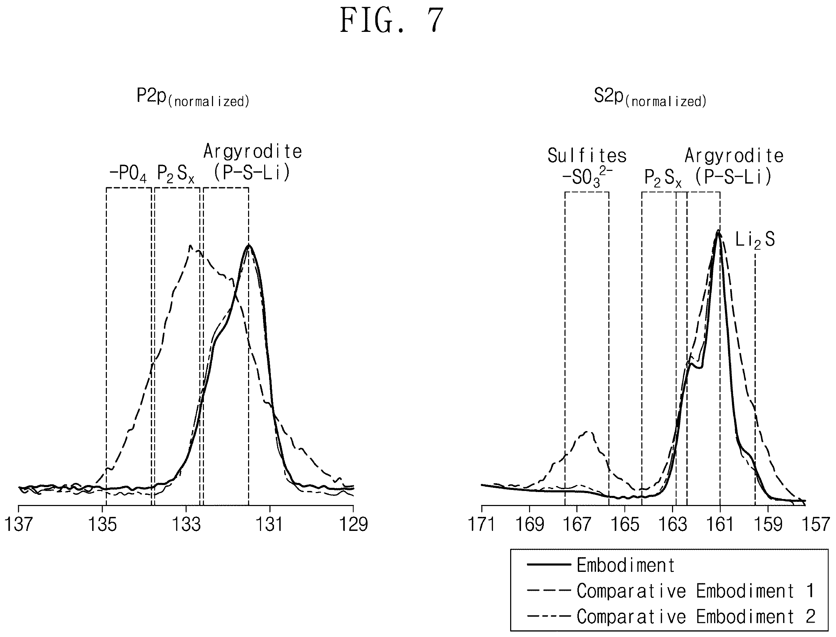

The positive electrode slurry according to Embodiment 1, Comparative Embodiment 1, and Comparative Embodiment 2 was coated onto a substrate and subjected to cross-sectional treatment, and X-ray Photoelectron Spectroscopy (XPS) analysis was performed to evaluate the degree of degradation of the solid electrolyte. The results are shown in FIG. 7.

Referring to FIG. 7, the structure of the sulfide-based solid electrolyte was clearly observed in Embodiment 1 and Comparative Embodiment 2, where the surface of the sulfide based solid electrolyte was coated, whereas chemical changes due to degradation was observed in Comparative Embodiment 1, where no surface treatment was performed.

### Evaluation Example 2: Evaluation of Ionic Conductivity of Positive Electrode

The positive electrode slurry prepared in each of Embodiment 1, Comparative Embodiment 1, and Comparative Embodiment 2 was coated onto a substrate and dried at 90°C for 5 hours to form a positive electrode active material layer (coated product). Coated product was punched into a circular shape having a diameter of 10 mm, and a sample was prepared by attaching a substrate to both sides. The sample was then placed in a measurement jig and pressed under a pressure of 10 Nm. The impedance of the prepared sample was measured at an amplitude of 10 mV, and a frequency range of 0.01 Hz to 1 MHz at 25° C. The resistance value was obtained from the arc of the Nyquist plot of the impedance measurement results, and the ionic conductivity was calculated by considering the sample's area and thickness. The measurement results are shown in Table 1 below.

**Table 1:**

| | Ionic conductivity (mS/cm) |
|---|---|
| Embodiment 1 | 0.83 |
| Comparative Embodiment 1 | 0.09 |
| Comparative Embodiment 2 | 0.26 |

Referring to Table 1, it can be seen that the positive electrode prepared according to the Embodiment exhibits superior or improved ionic conductivity compared to the positive electrodes prepared according to Comparative Embodiments 1 and 2. This may be because chemical changes due to the degradation of the solid electrolyte occurred in the case of Comparative Embodiment 1, while the residual coating layer acted as a resistance in the case of Comparative Embodiment 2.

### Evaluation Example 3: Evaluation of Lifetime Characteristic of All-Solid-State Battery

The lifetime characteristics of the all-solid-state batteries manufactured according to Embodiment 1 and Comparative Embodiments 1 and 2 were evaluated by the following method. The results are shown in Table 2 below.

The all-solid-state batteries manufactured in Embodiment 1 and Comparative Embodiments 1 and 2 were charged at a constant current of 0.1C rate at 45°C until the voltage reached 4.25V (vs. Li). Subsequently, charging was continued in a constant voltage mode, maintaining 4.25V while applying a cut-off at a current of 0.05C rate. Next, the battery was discharged at a constant current of 0.1C rate until the voltage reached 2.8V (vs. Li) (formation cycle). After undergoing the formation cycle, the lithium battery was charged at a constant current of 0.5C rate at 45°C until the voltage reached 4.25V (vs. Li). Then, the lithium battery was discharged at a constant current of 0.5C rate until the voltage reached 2.8V (vs. Li). This cycle was repeated under the same conditions up to the 100th cycle (100 repetitions). A rest period of 10 minutes was applied after each charge/discharge cycle. The results of the charge/discharge experiment are shown in Table 2 below.

**Table 2:**

| | 1^{st} cyc Discharge Capacity (mAh/g) | 25^{th} cyc Discharge Capacity (mAh/g) | 50^{th} cyc Discharge Capacity (mAh/g) | 75^{th} eye Discharge Capacity (mAh/g) | 100^{th} cyc Discharge Capacity (mAh/g) |
|---|---|---|---|---|---|
| Embodiment 1 | 179.7 | 172.8 | 168.9 | 165.3 | 162.7 |
| Comparative Embodiment 1 | 151.6 | 145.2 | 139.8 | 135.3 | 133.5 |
| Comparative Embodiment 2 | 163.2 | 155.5 | 149.1 | 146.4 | 142.0 |

Referring to Table 2, it can be seen that in the case of Comparative Embodiment 1 where no surface treatment was performed, the lowest discharge capacity was exhibited over 1 to 100 cycles due to solid electrolyte degradation caused by the solvent. Comparative Embodiment 2, where the solid electrolyte particles were coated with polymer showed better lifetime characteristics than Comparative Embodiment 1. On the other hand, the surface modifier used in the present disclosure effectively protected the solid electrolyte in a slurry state and was easily removed during electrode drying, resulting in the highest ionic conductivity and desired or improved lifetime characteristics.

The solid electrolyte composite according to the present disclosure may have desired or improved solvent stability. The positive electrode and the solid electrolyte layer manufactured using the solid electrolyte composite may have desired or improved lifetime characteristics and desired or improved ion conductivity.

Although some example embodiments of the present disclosure have been discussed with reference to accompanying figures, it is understood that various changes in form and details may be made therein without departing from the spirit and scope of the present disclosure. It therefore is understood that the example embodiments described above are just illustrative but not limitative in all aspects.

## Claims

1. A solid electrolyte composite comprising:
a sulfide-based solid electrolyte; and
a surface modifier on a surface of the sulfide-based solid electrolyte,
wherein the surface modifier comprises a linear hydrocarbon chain and a polar functional group bonded to the linear hydrocarbon chain, and
wherein the surface modifier is attached to the surface of the sulfide-based solid electrolyte via the polar functional group.

2. The solid electrolyte composite of claim 1,
wherein the surface modifier is attached to the surface of the sulfide-based solid electrolyte via electrostatic attraction between the polar functional group and the sulfide-base solid electrolyte.

3. The solid electrolyte composite of claim 1 or 2,
wherein the polar functional group is in contact with the surface of the sulfide-based solid electrolyte.

4. The solid electrolyte composite of any of the claims 1 to 3,
wherein the polar functional group comprises at least one of a thiol group, a hydroxyl group, an amine group, an aldehyde group, an acetic acid group, an ester group, and a combination thereof.

5. The solid electrolyte composite of any of the claims 1 to 4,
wherein the hydrocarbon chain has ≥ 5 to ≤ 15 carbon atoms.

6. The solid electrolyte composite of any of the claims 1 to 5,
wherein the surface modifier comprises CH₃(CH₂)ₙSH(where 4≤n≤14).

7. The solid electrolyte composite of any of the claims 1 to 6,
wherein the surface modifier has a boiling point in a range of ≥ 120° C to ≤ 250° C.

8. The solid electrolyte composite of any of the claims 1 to 7,
wherein the sulfide-based solid electrolyte comprises at least one of Li₇₋ₓPS₆₋ₓClₓ(where 0 ≤ x ≤ 2), Li₇₋ₓPS₆₋ₓBrₓ(where 0 ≤ x ≤ 2), Li₇₋ₓPS₆₋ₓIₓ(where 0 ≤ x ≤ 2), Li_{7-y}M1_{y}PS_{6-z}M2_{z}(where 0 ≤ y ≤ 2, and 0 ≤ z ≤ 2), and a combination thereof,
wherein M1 comprises at least one element from Groups 3 to 15 of the Periodic Table, and
wherein M2 comprises at least one element from Group 17 of the Periodic Table.

9. The solid electrolyte composite of any of the claims 1 to 8,
wherein an average particle diameter (D50) of the sulfide-based solid electrolyte is in a range of ≥ 2 µm to ≤ 10 µm.

10. A positive electrode active material slurry comprising the solid electrolyte
composite of claim 1,
and a positive electrode active material.

11. The positive electrode active material slurry of claim 10,
wherein the polar functional group comprises at least one of a thiol group, a hydroxyl group, an amine group, an aldehyde group, an acetic acid group, an ester group, and a combination thereof, and
wherein the hydrocarbon chain has ≥ 5 to ≤ 15 carbon atoms.

12. The positive electrode active material slurry of claim 10 or 11,
wherein the surface modifier comprises CH₃(CH₂)ₙSH (where 4≤n≤14).

13. The positive electrode active material slurry of any of the claims 10 to 12,
wherein the surface modifier has a boiling point in a range of ≥ 120° C to ≤ 250° C.

14. A method for manufacturing a solid electrolyte composite, the method
comprising:
preparing a sulfide-based solid electrolyte;
preparing a surface modifier; and
mixing the sulfide-based solid electrolyte with the surface modifier;
wherein the surface modifier comprises a linear hydrocarbon chain and a polar functional group bonded to the linear hydrocarbon chain, and
wherein the surface modifier is attached to the surface of the sulfide-based solid electrolyte via the polar functional group.

15. The method of claim 14,
wherein the polar functional group comprises at least one of a thiol group, a hydroxyl group, an amine group, an aldehyde group, an acetic acid group, an ester group, and a combination thereof, and
wherein the hydrocarbon chain has ≥ 5 to ≤ 15 carbon atoms.
